# FASCICULE DE BREVET EUROPEEN

(11) **EP 1 767 414 B1**
(45) Date de publication et mention de la délivrance du brevet: **10.09.2008**
(21) Numéro de dépôt: 06300979.9
(22) Date de dépôt: 25.09.2006
(51) Int. Cl.: B60R 22/03

(54) **Système de retenue pour véhicule automobile**
Fahrzeugrückhaltesystem
Vehicle restraint system

(30) Priorité: 26.09.2005 FR 0552857
(43) Date de publication de la demande: 28.03.2007
(73) Titulaire: PEUGEOT CITROËN AUTOMOBILES S.A., 78140 Vélizy Villacoublay (FR)
(72) Inventeur: Nicolas, Daniel, 78360 Montesson (FR)
(74) Mandataire: Couillard, Yann Luc Raymond

(56) Documents cités:
- DE-A1- 2 822 055
- FR-A- 2 279 428
- GB-A- 2 235 362
- US-A- 4 589 680

## Description

L'invention se rapporte à un système de retenue pour véhicule automobile et notamment à un dispositif de ceinture de sécurité pour les personnes présentes dans le véhicule.

Il y a de plus en plus de véhicules qui comportent des portes latérales coulissantes. Elles permettent en effet un accès aisé à partir d'un volume d'ouverture minime. Cela permet notamment de pénétrer facilement dans le véhicule automobile même s'il est stationné sur une place très exiguë. Dans le cas où deux portes latérales coulissantes sont les seuls moyens d'accès à bord, il est nécessaire de les réaliser suffisamment large pour que les passagers arrières puissent entrer suite au rabattage du siège avant. Cela oblige à positionner le pied milieu très en arrière des fixations du siège avant. La ceinture de sécurité devient alors accessible de l'avant uniquement par des contorsions inacceptables.

Le but de la présente invention est de pallier tout ou partie les inconvénients cités précédemment en proposant un système permettant à la ceinture de rester accessible porte fermée et qui n'empêche ni l'ouverture de la porte ni l'accès aux places arrières.

Un système de retenue avec les caractéristiques du préambule de la revendication indépendante 1 est connu dans le document US 4 589 680 A.

A cet effet, l'invention se rapporte à un système de retenue notamment pour véhicule automobile comportant une sangle montée élastiquement sur la structure dudit véhicule qui comprend une boucle destinée à coopérer avec un dispositif de verrouillage solidaire de ladite structure pour immobiliser une personne en cas de forte décélération dudit véhicule caractérisé en ce qu'il comporte de plus un dispositif d'accrochage temporaire de la boucle monté sur un ouvrant dudit véhicule pour faciliter la mise à disposition de ladite boucle.

Conformément à d'autres caractéristiques avantageuses de l'invention :
- le dispositif d'accrochage temporaire comporte un corps principal monté pivotant sur ledit ouvrant pour compenser le déplacement relatif entre ledit ouvrant et la structure du véhicule ;
- le corps principal comporte un ergot formant un crochet destiné à attacher ladite boucle ou, alternativement, une pièce creuse qui comprend une lame intérieure formant un crochet destiné à attacher ladite boucle ;
- la boucle comporte un dispositif de guidage de la sangle pour compenser le déplacement relatif entre ledit ouvrant et la structure du véhicule ;
- le dispositif de guidage comporte une surface externe sensiblement circulaire de glissement qui évite l'arc-boutement de la sangle sur le corps de la boucle ou, alternativement, une pièce sensiblement cylindrique montée pivotante sur le corps de la boucle pour faciliter le déplacement relatif de la sangle par rapport à la boucle ;
- l'ouvrant est une porte latérale coulissante ;
- le dispositif d'accrochage temporaire est monté sur l'ouvrant le plus près possible de l'avant du véhicule automobile pour faciliter l'accès à ce dernier et/ou à proximité de la commande d'ouverture de l'ouvrant pour faciliter la mise à disposition de la boucle.

D'autres particularités et avantages ressortiront clairement de la description qui en est faite ci-après, à titre indicatif et nullement limitatif, en référence aux dessins annexés, dans lesquelles :
- les figures 1 et 2 sont une représentation schématique d'un habitacle dont la porte est respectivement fermée et ouverte ;
- les figures 3 et 4 sont une représentation schématique d'un premier mode de réalisation d'un dispositif d'accrochage temporaire selon l'invention ;
- les figures 5 et 6 sont une représentation schématique d'un second mode de réalisation d'un dispositif d'accrochage temporaire selon l'invention ;
- les figures 7 et 8 sont une représentation schématique d'un premier mode de réalisation d'un dispositif de guidage de sangle selon l'invention ;
- la figure 9 est une représentation schématique d'un second mode de réalisation d'un dispositif de guidage de sangle selon l'invention.

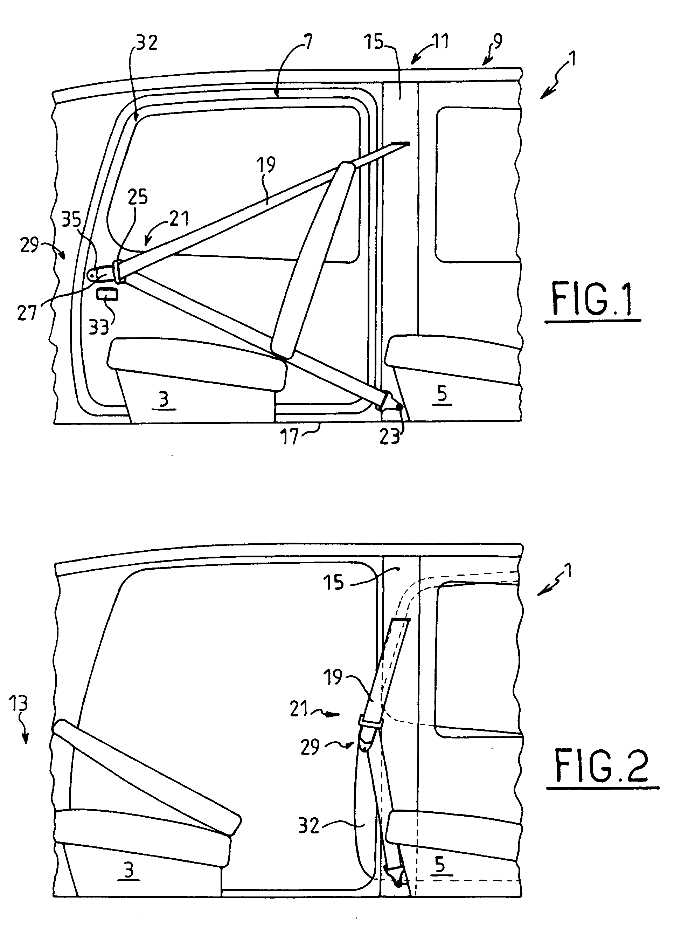

Comme illustré dans l'exemple des figures 1 et 2, on peut voir un habitacle d'un véhicule automobile généralement annoté 1. Le véhicule automobile est du type à trois portes. L'habitacle 1 comporte principalement des sièges avant 3 et arrière 5, un ouvrant 7, une structure 9 et un dispositif de ceinture de sécurité 11. Il est visible entre les figures 1 et 2 que le siège avant 3 est escamotable vers l'avant 13 du véhicule automobile afin de faciliter l'accès aux sièges arrière 5.

La structure 9 du véhicule automobile comporte de façon usuelle notamment un pied milieu 15 et un plancher 17. Elle est utilisée pour monter le dispositif de ceinture de sécurité 11. Ce dernier comporte principalement une sangle 19 et une boucle 21. La sangle 19 est montée élastiquement sur le pied milieu 15, par exemple au moyen d'un enrouleur (non représenté) et d'un pivot 23, de manière à ce qu'elle soit tendue en permanence.

Comme illustré aux figures 1 à 4, une boucle 21 est de forme généralement en T. La partie verticale 27 comporte l'évidement 28 de la boucle 21 destinée à coopérer avec un dispositif de verrouillage (non représenté) fixé sur le plancher 17 de la structure 9. La partie horizontale 25 est sensiblement en forme de rectangle creux dont le creux 31 est utilisé pour passer la sangle 19. La partie horizontale 25 de la boucle 21 encadre ainsi en permanence une partie de la sangle 19 mais l'un et l'autre sont libres de glisser l'une sur l'autre. De manière conventionnelle, cela permet au dispositif de ceinture de sécurité 11 de posséder trois points fixes permettant d'immobiliser une personne assise lors d'une forte décélération du véhicule automobile.

L'ouvrant 7 est une porte latérale coulissante qui comporte principalement un cadre 32 sur lequel sont montés un dispositif d'accrochage temporaire 29 de la boucle 21 et une commande d'ouverture 33 de l'ouvrant 7. Si la porte latérale coulissante 7 est du type motorisé, la commande d'ouverture 33 peut être, par exemple, un commutation électrique.

L'invention comporte une première variante du dispositif d'accrochage temporaire 29 comme illustré aux figures 1 à 4. II est constitué d'un corps principal 35 monté pivotant, sensiblement perpendiculairement par rapport à la longueur du véhicule, sur le cadre 32 de l'ouvrant 7, par exemple au moyen d'un boulon 37 et d'une attache 39. Le corps principal 35 comporte une pièce creuse comprenant une lame 41 formant un crochet 43. De manière préférée, la lame 41 est d'une épaisseur sensiblement égale ou inférieure à 1 millimètre pour permettre au crochet 43 de se déplacer à l'intérieur du creux du corps principal 35.

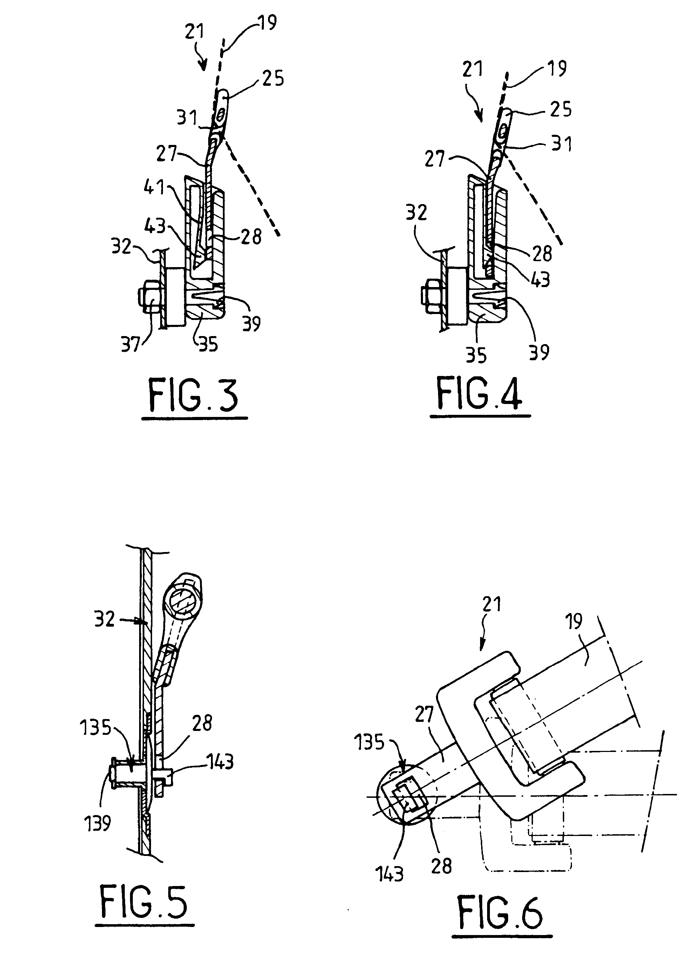

La mise en place de la boucle 21 dans le dispositif d'accrochage temporaire 29 va maintenant être expliquée. Comme on peut le voir dans l'exemple illustré à la figure 3, la partie verticale 27 de la boucle 21 est insérée dans le creux du corps principal 35 jusqu'à ce que l'extrémité de la partie verticale 27 entre en contact le crochet 43. Le mouvement de la boucle 21 étant continu, ladite extrémité glisse contre le chanfrein du crochet 43 ce qui oblige ce dernier à imprimer un mouvement sensiblement perpendiculaire à la longueur du véhicule vers le cadre 32 de l'ouvrant 7.

Ce déplacement du crochet 43 est rendu possible par la déformation élastique de la lame 41. La partie verticale 27 peut ainsi continuer à être introduite jusqu'à ce que l'évidement 28 de la boucle 21 fasse vis-à-vis avec le crochet 43. En effet, par retour élastique de la lame 41, le crochet 43 est poussé vers l'évidement 28 ce qui attache la boucle 21 au dispositif d'accrochage temporaire 29 comme illustré à la figure 4.

Dans cette position, l'ensemble boucle 21 - dispositif d'accrochage temporaire 29 peut compenser le déplacement relatif entre l'ouvrant 7 et la structure 9 du véhicule comme illustré aux figures 1 et 2. On peut voir que l'ensemble boucle 21 - dispositif d'accrochage temporaire 29 passe d'une position sensiblement horizontale lorsque l'ouvrant 7 est fermé (figure 1) à une position sensiblement verticale lorsque l'ouvrant 7 est totalement ouvert (figure 2). On comprend donc que le corps principal 35 pivote dans le sens trigonométrique au fur et à mesure que la porte latérale coulissante 7 s'ouvre. Cela est rendu possible par la sangle 19 qui, comme elle est montée élastiquement sur le pied milieu 15, est tirée au fur et à mesure du rapprochement entre la boucle 21 et le pied milieu 15. Par conséquent, la sangle 19, lors de son retrait, déplace la boucle 21 par contact au niveau du bord du creux 31 de sa partie horizontale 25 au fur et à mesure que dudit rapprochement.

Pour détacher la boucle 21, il suffit de la tirer afin que le bord de l'évidement 28 entre en contact avec le deuxième chanfrein (sensiblement symétrique au premier) du crochet 43. Cela a pour conséquence déplacer à nouveau le crochet 43 et permet de libérer la boucle 21.

L'invention comporte une deuxième variante du dispositif d'accrochage temporaire 129 comme illustré aux figures 5 et 6. Il est constitué d'un corps principal 135 monté pivotant, sensiblement perpendiculairement par rapport à la longueur du véhicule, sur le cadre 32 de l'ouvrant 7, par exemple au moyen d'une attache 139. Le corps principal 135 comporte un ergot comprenant un crochet 143.

La mise en place de la boucle 21 dans le dispositif d'accrochage temporaire 129 va maintenant être expliquée. Dans un premier temps, l'évidement 28 de la partie verticale 27 de la boucle 21 est mis en vis-à-vis du crochet 143 du corps principal 135. Dans un deuxième temps, la boucle 21 est rapprochée du cadre 32 de manière à ce que le crochet 143 s'engage dans l'évidement 28, la boucle 21 est alors attachée au dispositif d'accrochage temporaire 129. La sangle 19, du fait qu'elle est montée élastiquement sur le pied milieu 15, est tendue en permanence. Dans la position attachée illustrée à la figure 5, la boucle 21 est donc tirée en permanence par l'intermédiaire du bord du creux 31 de sa partie horizontale 25 et par conséquent est maintenue en place sur le dispositif d'accrochage temporaire 129.

Dans cette position, l'ensemble boucle 21 - dispositif d'accrochage temporaire 129 peut compenser le déplacement relatif entre l'ouvrant 7 et la structure 9 du véhicule comme illustré aux figures 1 et 2 sensiblement de la même manière que celle expliqué ci-dessus. Dans l'exemple illustré à la figure 6, on peut voir deux positions du dispositif d'accrochage temporaire 129. On remarque ainsi que le crochet 143 est monté sur le même axe que le pivot du corps principal 135 et c'est ce premier 143 qui transmet le mouvement de la boucle 21 au second 135. Pour détacher la boucle 21, il suffit de remettre l'évidement 28 de la partie verticale 27 en vis-à-vis du crochet 143 afin de l'extraire du dispositif d'accrochage temporaire 129.

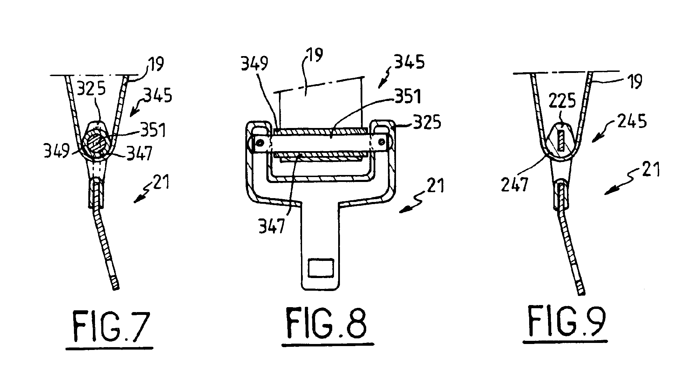

Il est possible d'améliorer les première 29 et deuxième 129 variantes du dispositif d'accrochage temporaire en facilitant la compensation du retrait de la sangle 19 au moyen d'un dispositif de guidage comme illustré dans les exemples des figures 7 à 9. Dans un premier mode de réalisation illustré à la figure 9, le dispositif de guidage 245 est monté sur la partie horizontale 225 de la boucle 21. Il comporte une surface externe 247 de glissement de la sangle 19 sensiblement circulaire. De manière préférée, la surface externe 247 est sensiblement de forme semi-circulaire comportant un revêtement lisse pour éviter de détériorer la sangle 19 par arc-boutement.

Dans un deuxième mode de réalisation illustré aux figures 7 et 8, le dispositif de guidage 345 est monté sur la partie horizontale 325 de la boucle 21. Il comporte une pièce essentiellement cylindrique 349 qui, montée à rotation sur un pivot 351, comporte une surface externe 347 de contact non glissant avec la sangle 19. De manière préférée, la surface externe 347 est sensiblement de forme circulaire comportant un revêtement rugueux apte à assister le mouvement de la sangle 19, lors de son retrait et de son extension comme expliqué ci-dessus, par rapport à la boucle 21.

Le système comme expliqué ci-dessus à l'aide de ces deux variantes de dispositifs d'accrochage temporaire 29, 129 et de dispositifs de guidage 245, 345 permet à la boucle 21 de rester accessible même lorsque la porte 7 est fermée sans cependant empêcher ni l'ouverture de la porte 7 ni l'accès aux places arrière 5.

Bien entendu, la présente invention ne se limite pas à l'exemple illustré mais est susceptible de diverses variantes et modifications qui apparaîtront à l'homme de l'art. Il peut être imagé par exemple que le corps principal 35, 135 n'est pas monté pivotant sur la porte 7 mais de manière fixe et directement en position verticale comme quand la porte 7 est totalement ouverte. Bien évidemment, le véhicule automobile peut comporter plus de deux portes latérales coulissantes.

## Revendications

1. Système de retenue (11) notamment pour véhicule automobile comportant une sangle (19) montée élastiquement sur la structure (9) dudit véhicule qui comprend une boucle (21) destinée à coopérer avec un dispositif de verrouillage solidaire de ladite structure pour immobiliser une personne en cas de forte décélération dudit véhicule **caractérisé en ce qu'**il comporte de plus un dispositif d'accrochage (29, 129) temporaire de la boucle (21) monté sur un ouvrant (7) dudit véhicule pour faciliter la mise à disposition de ladite boucle.

2. Système (11) selon la revendication 1, **caractérisé en ce que** le dispositif d'accrochage (29, 129) temporaire comporte un corps principal (35, 135) monté pivotant sur ledit ouvrant pour compenser le déplacement relatif entre ledit ouvrant et la structure (9) du véhicule.

3. Système (11) selon la revendication 2, **caractérisé en ce que** le corps principal (135) comporte un ergot (143) formant un crochet destiné à attacher ladite boucle.

4. Système (11) selon la revendication 2, **caractérisé en ce que** le corps principal (35) comporte une pièce creuse qui comprend une lame intérieure (41) formant un crochet (43) destiné à attacher ladite boucle.

5. Système (11) selon l'une des revendications précédentes, **caractérisé en ce que** la boucle (21) comporte un dispositif de guidage (245, 345) de la sangle (19) pour compenser le déplacement relatif entre ledit ouvrant et la structure (9) du véhicule.

6. Système (11) selon la revendication 5, **caractérisé en ce que** le dispositif de guidage (245) comporte une surface externe (247) sensiblement circulaire de glissement qui évite l'arc-boutement de la sangle (19) sur le corps de la boucle (21).

7. Système (11) selon la revendication 5, **caractérisé en ce que** le dispositif de guidage (345) comporte une pièce (349) sensiblement cylindrique montée pivotante sur le corps de la boucle (21) pour faciliter le déplacement relatif de la sangle (19) par rapport à la boucle (21).

8. Système (11) selon l'une des revendications précédentes, **caractérisé en ce que** l'ouvrant (7) est une porte latérale coulissante.

9. Système (11) selon la revendication 8, **caractérisé en ce que** le dispositif d'accrochage temporaire (29, 129) est monté sur l'ouvrant (7) le plus près possible de l'avant du véhicule automobile pour faciliter l'accès à ce dernier.

10. Système (11) selon la revendication 8, **caractérisé en ce que** le dispositif d'accrochage temporaire (29, 129) est monté à proximité de la commande d'ouverture (33) de l'ouvrant (7) pour faciliter la mise à disposition de la boucle (21).

## Claims

1. Restraint system (11) particularly for a motor vehicle, comprising a strap (19) mounted elastically on the structure (9) of the said vehicle and which comprises a buckle (21) intended to interface with a locking device secured to the said structure in order to immobilise someone if the said vehicle undergoes sharp deceleration, **characterized in that** it additionally comprises a catching device (29, 129) for temporarily catching the buckler (21) and mounted on an opening leaf (7) of the said vehicle to make the said buckle more readily accessible.

2. System (11) according to Claim 1, **characterized in that** the temporary catching device (29, 129) comprises a main body (35, 135) pivot-mounted on the said opening leaf in order to compensate for the relative movement between the said opening leaf and the structure (9) of the vehicle.

3. System (11) according to Claim 2, **characterized in that** the main body (135) comprises a peg (143) forming a hook intended to attach to the said buckle.

4. System (11) according to Claim 2, **characterized in that** the main body (35) comprises a hollow component which comprises an internal blade (41) forming a hook (43) intended to attach to the said buckle.

5. System (11) according to one of the preceding claims, **characterized in that** the buckle (21) comprises a guide device (245, 345) for guiding the strap (19) in order to compensate for the relative movement between the said opening leaf and the structure (9) of the vehicle.

6. System (11) according to Claim 5, **characterized in that** the guide device (245) comprises a substantially circular external sliding surface (247) that prevents the strap (19) from being braced against the body of the buckle (21).

7. System (11) according to Claim 5, **characterized in that** the guide device (345) comprises a substantially cylindrical component (349) pivot-mounted on the body of the buckle (21) to make relative movement of the strap (19) with respect to the buckle (21) easier.

8. System (11) according to one of the preceding claims, **characterized in that** the opening leaf (7) is a sliding side door.

9. System (11) according to Claim 8, **characterized in that** the temporary catching device (29, 129) is mounted on the opening leaf (7) as near as possible to the front of the motor vehicle in order to facilitate access thereto.

10. System (11) according to Claim 8, **characterized in that** the temporary catching device (29, 129) is mounted near the control (33) used to open the opening leaf (7) in order to make the buckle (21) more readily accessible.

## Patentansprüche

1. Rückhaltesystem (11) insbesondere für Kraftfahrzeug, das einen an der Struktur (9) des Fahrzeugs elastisch angebrachten Gurt (19) enthält, der seinerseits eine Spange (21) aufweist, die dazu vorgesehen ist, mit einer mit der Struktur fest verbundenen Verriegelungsvorrichtung zusammenzuwirken, um eine Person im Fall einer starken Verzögerung des Fahrzeugs unbeweglich zu machen, **dadurch gekennzeichnet, dass** es außerdem eine Vorrichtung (29, 129) zum vorübergehenden Verankern der Spange (21) aufweist, die an einem Öffnungselement (7) des Fahrzeugs angebracht ist, um die Verfügbarkeit der Spange zu erleichtern.

2. System (11) nach Anspruch 1, **dadurch gekennzeichnet, dass** die Vorrichtung (29, 129) zum vorübergehenden Verankern einen Hauptkörper (35, 135) aufweist, der an dem Öffnungselement schwenkbar angebracht ist, um die relative Verlagerung zwischen dem Öffnungselement und der Struktur (9) des Fahrzeugs auszugleichen.

3. System (11) nach Anspruch 2, **dadurch gekennzeichnet, dass** der Hauptkörper (135) eine Nase (143) aufweist, die einen Haken bildet, der dazu vorgesehen ist, die Spange zu befestigen.

4. System (11) nach Anspruch 2, **dadurch gekennzeichnet, dass** der Hauptkörper (35) ein Hohlteil aufweist, das ein inneres Plättchen (41) enthält, das einen Haken (43) bildet, der dazu vorgesehen ist, die Spange zu befestigen.

5. System (11) nach einem der vorhergehenden Ansprüche, **dadurch gekennzeichnet, dass** die Spange (21) eine Führungsvorrichtung (245, 345) für den Gurt (19) aufweist, um die relative Verlagerung zwischen dem Öffnungselement und der Struktur (9) des Fahrzeugs auszugleichen.

6. System (11) nach Anspruch 5, **dadurch gekennzeichnet, dass** die Führungsvorrichtung (245) eine im Wesentlichen kreisförmige äußere Gleitoberfläche aufweist, die ein Verklemmen des Gurts (19) am Körper der Spange (21) vermeidet.

7. System (11) nach Anspruch 5, **dadurch gekennzeichnet, dass** die Führungsvorrichtung (345) ein im Wesentlichen zylindrisches Teil (349) aufweist, das am Körper der Spange (21) schwenkbar angebracht ist, um die relative Verlagerung des Gurts (19) in Bezug auf die Spange (21) zu erleichtern.

8. System nach einem der vorhergehenden Ansprüche, **dadurch gekennzeichnet, dass** das Öffnungselement (7) eine seitliche Schiebetür ist.

9. System (11) nach Anspruch 8, **dadurch gekennzeichnet, dass** die Vorrichtung (29, 129) zum vorübergehenden Verhaken an dem Öffnungselement (7) so nahe wie möglich an der Vorderseite des Kraftfahrzeugs angebracht ist, um den Zugang zu diesem Letzteren zu erleichtern.

10. System (11) nach Anspruch 8, **dadurch gekennzeichnet, dass** die Vorrichtung (29, 129) zum vorübergehenden Verhaken in der Nähe der Öffnungssteuerung (33) des Öffnungselements (7) angebracht ist, um die Anordnung der Spange (21) zu erleichtern.
